# EUROPEAN PATENT APPLICATION

(11) **EP 1 748 657 A1**
(43) Date of publication of application: **31.01.2007**
(21) Application number: 06015340.0
(22) Date of filing: 24.07.2006
(51) Int. Cl.: H04Q 7/22

(54) **Method and system for diverting short messages**

(30) Priority: 24.07.2005 CN 200510036201
(71) Applicant: Huawei Technologies Co., Ltd., Longgang District, Shenzhen, Guangdong 518129 (CN)
(72) Inventor: Ma, Ningzhi, Shenzhen Guangdong Province 518129 (CN); Ma, Jiaming, Shenzhen Guangdong Province 518129 (CN); Zhong, Chaodong, Shenzhen Guangdong Province 518129 (CN); Wang, Xuan, Shenzhen Guangdong Province 518129 (CN)
(74) Representative: Plougmann & Vingtoft A/S

(57) **Abstract**

A method and a system for diverging short messages are disclosed. The method is applicable to a networking with more than one SMS system each having two corresponding modules including a SMSC and a GIW connected with the GIW, and the networking is provided with a FCC configured to connect with the modules in the networking. The method includes sending short messages to the FCC by a module in the networking, in a case that a peer module of the module in a current SMS path is unable to receive short messages; and detennining diverging paths for the short messages by the FCC after receiving the short messages, and sending the short messages through the diverging paths. The present invention facilitates diverging the short messages in the networking and achieves to diverge according to operating information of each module in the networking.

## Description

### Field of the Invention

The present invention relates to the short message service (SMS), and more particularly to a method and a system for diverging short messages.

### Background

The SMS system is a service point with independent functions and generally is connected to the Public Mobile Network (PLMN) through the Signaling Transfer Point (STP) so as to facilitate the SMS applications and provide operators with the short message service and its abundant value added services.

Generally, a typical networking for the SMS is constituted by shielding the Short Message Service Center (SMSC) from interacting with the PLMN by the Gateway Interworking (GIW), whereas connecting the GIW to the PLMN through the STP. The networking for the SMS may include a plurality of SMS systems, each of which includes a SMSC and a GIW. In the mobile network, the. SMS systems are independent with each other and each SMS system has its own subscribers, so once a system breaks down, the SMS provided by this system will be interrupted and become unavailable for the respective subscribers.

With the development of the SMS and the popularity of mobile users, the SMS traffic increases accordingly, which requires more for backup for disaster and reliability of the SMS system, and requires the SMS system have self-adaptive abilities to react with the operation of the current system for providing the SMS consistently and stably as much as possible.

Accordingly, the Chinese patent publication No. CN 1453979A discloses an applicable technical solution, which can backup each SMS system in one another so as to compensate for the deficiency of the disaster capability in one system and improve the reliability of the SMS.

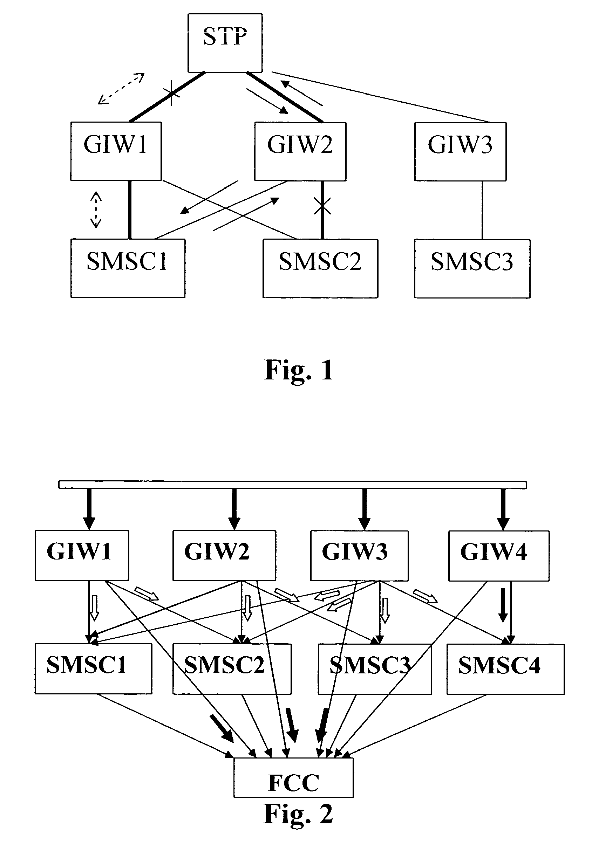

Fig. 1 is a diagram showing the architecture of an SMS networking disclosed in the above publication. As shown in Fig. 1, the networking includes three SMS systems, i.e. GIW 1+SMSC 1, GIW 2+SMSC 2 and GIW 3+ SMSC 3, where the first and the second SMS systems are connected with each other so that one can become a backup for the other. As a result, if the GIW 1 breaks down, the STP can transfer the messages that are previously transmitted to the GIW 1, to the GIW 2, for example. Also, if the default SMSC 2 breaks down, the GIW 2 can transmit the messages to the SMSC 1 for processing so as to maintain the continuous service of the SMS.

The above technical solution facilitates the backup for disaster at a signaling level and a system level for the SMS system. Taking submission of short messages as an example, generally, the short message flow can be depicted as ->STP->GIW->SMSC and if the STP detects that the GIW of an SMS system breaks down, by using a STP Global Title address switch function, it will diverge the short messages to the GIW of the backup system so as to achieve the backup for disaster of the signaling level. In another aspect, it achieves the backup for disaster of the system level, for example, the SMSC 2 in Fig. 1 is a backup SMSC of the SMSC 1, and when the GIW 1 detects that the SMSC 1 breaks down, it will diverge the short messages to the SMSC 2. The flow of issuing the short messages is represented as ->SMSC->GIW->STP. The processes of backup for disaster of the signaling level and the system level based on the issue of the short messages are similar to those based on the submission of the short messages, so it will not be detailed here.

However, problems remain in the above solution; for example, the diverging of the short messages in the GIW/SMSC is too simple. Details will be analyzed as follows.

When short messages are diverged to other GIWs/SMSCs, the traffic of the short messages is diverged averagely, yet a current load of these GIWs/SMSCs is not taken into account. For example, in Fig. 1, when the GIW2 diverges messages to the SMSC 1, it may not estimate the current load of the SMSC 1. Moreover, since the GIW 2 is not connected with the SMSC 3 in the networking and may not employ the available processing capacity of the SMSC 3, GIW 2 cannot adjust the traffic diverged to different SMSCs in the networking. Further, even if the GIW 2 is connected with the SMSC 3, enabling to diverge the short messages, solutions regarding how to balance the traffic distribution between the SMSC 1 and the SMSC 3 and how to calculate the influence on the traffic of the SMSC 3 by the GIW 3, etc., are not mentioned in the above publication.

Therefore, the prior SMS system simply attains the object of recovery from the disaster by establishing the backup and from an aspect of redundancy, and it can only performs a so-called redundancy backup with the established backup SMS systems, yet it cannot adjust the traffic according to the actual load of each SMS system in the current networking. Moreover, in prior art, while transferring the short messages to the backup system, it operates all the messages irrespective of the current load of the backup system. As a result, probability to impact the backup systems is increased when the disaster recovery is achieved.

### Summary of the Invention

Accordingly, an object of the present invention is to provide a method for diverging short messages. When one or more modules in a networking desire to transfer the short messages, any one or more corresponding modules can be selected to diverge the short messages according to requirements.

Another object of the present invention is to diverge and transfer the short messages desired for transferring by modules in the networking according to operating information of each module.

Still another object of the present invention is to provide a system for diverging short messages. To achieve these and other objects of the present invention, a method for diverging short messages, applicable to a system including more than one short message service (SMS) system each having modules including a short message service center (SMSC) and a Gateway Interworking (GIW) connected with the SMSC, wherein the system including more than one SMS system is provided with a flow control center (FCC) configured to connect with each module. The method includes sending the short messages to the FCC by one module, in a case that a peer module of said one module in a SMS path for said short messages is unable to receive short messages; and determining a diverging path for the short messages by the FCC after receiving the short messages, and sending the short messages through the diverging path.

In the above method, the case that a peer module of the one module in a SMS path for the short messages is unable to receive short messages is determined by that a connection between the one module and the peer module breaks, or the peer module is busy.

In the above method, determining a diverging path for the short messages by the FCC includes selecting one or more modules by the FCC from other modules of a same type with the peer module in the networking, and determining paths from the FCC to the selected modules to be the diverging paths for the short messages.

The above method further includes setting a message type for the short messages sent to the FCC, the message type including one or more from a changeable destination type, an unchangeable destination type and a group transmission type.

In a case that the short messages are the unchangeable destination type, the above method further includes carrying information of an unchangeable destination module in the short messages; and determining a diverging path for the short messages by the FCC includes obtaining information of the unchangeable destination module by the FCC from the short messages and determining a path from the FCC to the unchangeable destination module to be the diverging path for the short messages.

In a case that the short messages are the changeable destination type, determining a diverging path for the short messages by the FCC includes selecting one or more modules by the FCC from modules of a same type with the peer module in the networking, and determining paths from the FCC to the selected modules as the diverging paths for the short messages.

In a case that the short messages are the group transmission type, determining a diverging path for the short messages by the FCC includes selecting other modules of a same type with the peer module in the networking by the FCC, and determining paths from the FCC to all the other modules as the diverging paths for the short messages.

In the case that the short messages are the changeable destination type, the short messages carry a respective processing mode, the processing mode including a designated destination mode and an undesignated destination mode.

The above method further includes determining the processing mode carried in the short messages, prior to selecting one or more modules by the FCC, wherein if the undesignated destination mode is carried, performs selecting one or more modules by the FCC; and if the designated destination mode is carried, carries information of a destination designated module in the short messages, and the FCC obtains the information of the destination designated module and determines whether the destination designated module is able to diverge a traffic of the short messages, and if not, performs selecting one or more modules by the FCC; if yes, selects the destination designated module in priority and when the destination designated module is unable to diverge all the traffic of the short messages, performs selecting one or more modules by the FCC.

The above method further includes setting a unique identification for each module in the networking; and sending an identification of the peer module to the FCC by the module through the short messages, wherein selecting one or more modules by the FCC includes the FCC acquiring the identification of the peer module from the short messages, determining a type of a module corresponding to the identification, determining other modules of a same type with the peer module in accordance with the identification and selecting one or more modules from the other modules.

The above method further includes authenticating the identification of the module by the FCC, when the module accesses the FCC.

The above method further includes each module in the networking reporting a respective operating information thereof to the FCC; and the FCC determining a respective short message traffic for each selected module in accordance with operating information of said each selected module, and sending the short messages through the respective diverging path in accordance with the determined short message traffic, after selecting one or more modules by the FCC from modules of a same type with the peer module in the networking, and determining paths from the FCC to the selected modules as the diverging paths for the short messages but prior to sending the short messages through the diverging paths.

The operating information includes a maximum load and a current available load.

The step of the FCC determining a respective short message traffic for each selected module in accordance with operating information of said each selected module includes the FCC counting a sum of the available load of all the selected modules and counting a sum of the short message traffic of the selected modules to be diverged, where if the sum of the available load is larger than the sum of the short message traffic, diverges the short messages averagely to each selected module or proportionally to the available load of each module; otherwise, diverges a traffic of the short messages equal to the sum of the available load to all the selected modules averagely or diverges the traffic of the short messages proportionally to the available load of each module, and then diverges the remaining traffic of the short messages to all the selected modules under the maximum load of said selected modules or averagely.

The above method further includes each module in the networking reporting a respective operating information thereof to the FCC, the operating information including a current available status, wherein selecting one or more modules by the FCC from other modules includes acquiring operating information of each said other module and determining whether the current available status of each said other module is available, and if yes, selecting said other module; otherwise, abandoning the module.

In the networking, modules in a SMS system are further connected with corresponding modules in other SMS systems.

The above peer module belongs to a SMS system involving a module currently sending the short messages, or belongs to a SMS system other than the SMS system involving a module currently sending the short messages.

In another aspect, a system for diverging short messages includes more than one short message service (SMS) system, each having modules including a short message service center (SMSC) and a Gateway Interworking (GIW) connected with the SMSC; and a flow control center (FCC), configured to connect with each module for diverging short messages, wherein each module in the SMS system is configured to send short messages to the FCC in a case that a peer module of said each module in a SMS path for said short messages is unable to receive the short messages, and receiving short messages forwarded by the FCC; and the FCC is configured for receiving the short messages from said each module, determining diverging paths for the short messages and sending the short messages to other modules though the diverging paths.

The FCC includes a communication apparatus and a diverging apparatus, wherein the communication apparatus is used to receive the short messages from each module, receive the diverging paths determined by the diverging apparatus and transfer the short messages to the other modules though the diverging paths; the diverging apparatus is used to receive the short messages from the communication apparatus, determine the diverging paths for the short messages and send the determined diverging paths to the communication apparatus.

The FCC further includes a status detecting apparatus.

Each module is further configured for reporting respective operating information thereof to the communication apparatus in the FCC.

The communication apparatus is further configured for sending the received operating information to the status detecting apparatus.

The status detecting apparatus is further configured for receiving the operating information of each module from the communication apparatus, determining whether the module corresponding to the operating information is able to diverge short message traffic and sending information on whether the module is able to diverge the short message traffic to the diverging apparatus.

The diverging apparatus is further configured for receiving the information on whether the module is able to diverge the traffic from the status detecting apparatus and determining the diverging paths in accordance with the information.

The status detecting apparatus acknowledges that the module is unable to diverge the traffic currently and sends the information that the module is unable to diverge the traffic to the diverging apparatus, if not receiving the operating information of the modules from the communication apparatus within a predetermined time.

In the above system, modules in a SMS system are connected with corresponding modules in other SMS systems.

According to the present invention, the FCC is provided in the networking to diverge and transfer the short messages in each module. The traffic distribution can be adjusted by diverging according to the load and the operating status of each module in the system. Thereby, the stability, reliability and capability of disaster recovery for each SMS system are improved.

### Brief Description of the Drawings

Fig. 1 is a diagram showing the architecture of a SMS system in prior art;
Fig. 2 is a diagram showing the architecture of a diverging SMS system according to the present invention;
Fig. 3 is a schematic diagram showing the architecture of a system in Fig. 2 but with a FCC according to the present invention;
Fig. 4 is a schematic diagram showing an internal architecture of the FCC according to the present invention.

### Detailed Description of the Preferred Embodiments

The principal design of the present invention is to add a Flow Control Center (FCC) in a SMS networking, which can be called a diverging SMS system, and connect modules in each SMS system in the diverging SMS system, i.e. a SMSC and a GIW, with the FCC. When a SMSC in the diverging SMS system breaks down, the GIW corresponding to the SMSC converges the short messages designated to the SMSC to the FCC; and similarly, when a GIW breaks down, the SMSC corresponding to the GIW converges the short messages designated to the GIW to the FCC. The FCC subsequently determines diverging paths for the received short messages and diverges the messages through the determined diverging paths.

In addition, in the above diverging SMS system, the SMSC in each SMS system can be connected with the GIWs in other SMS systems and similarly, the GIW can be connected with the SMSCs in other SMS systems. In such case, when the FCC desires to transfer the short messages, it may also process to determine diverging paths and diverge the short messages.

For the above two networking architecture, although the connectivity between the GIW and the SMSC differs, the processes for determining the diverging paths and transferring the messages by the FCC are consistent.

The present method for diverging short messages achieves the following functions, including such as a function for redundancy path, facilitated by the FCC selecting the diverging paths for the short messages that currently requires transferring, and a function for intelligent diverging, which isfacilitated by the FCC diverging and transferring the short messages through the selected diverging paths according to a load of each module in the current diverging SMS system.

In order to better understand the present invention, detailed descriptions will be given with reference to the accompanying drawings and the embodiments.

Fig. 2 is a diagram showing the architecture of the diverging SMS system according to the present invention. As exemplarily illustrated, the diverging SMS system includes four SMS systems, each including two modules, i.e. a SMSC and a GIW. That is, the four SMS systems may particularly include SMSC 1+GIW 1, SMSC 2+GIW 2, SMSC 3+GIW 3 and SMSC 4+GIW 4 respectively, where each SMSC must be connected with the respective GIW in each SMS system. Further, each SMSC may connect with the GIWs in other SMS systems; whereas each GIW may connect with the SMSCs in other SMS systems. As exemplarily depicted in Fig. 2, the GIW 2 further connects to the SMSC 1, the SMSC 2, and the SMSC 3, while the SMSC 1 further connects to the GIW 1 and the GIW 2.More specifically, the present diverging SMS system includes a FCC, which is connected with all the SMSCs and the GIWs respectively in the diverging SMS system. When transferring the short messages, the SMSC may regard the FCC as a GIW and transfer the short messages to the FCC. Similarly, the GIW may regard the FCC as a SMSC and transfer the short messages to the FCC. Therefore, the FCC serves as a transferring point.

Since the processing by the FCC on the short messages from a SMSC is consistent with that from a GIW, descriptions will only be made with reference to the GIW1 in Fig. 2 for an example.

Reference will now be made to the function for redundancy path according to the present invention.

As depicted in Fig. 2, the SMSCs and the GIWs in all the SMS systems are connected with the FCC. Thereby, based on a previous uplink short message submission path ->STP->GIW->SMSC, a redundancy path ->STP->GIW->FCC->SMSC can be obtained; similarly, based on a previous downlink short message submission path ->SMSC-> GIW->STP, a redundancy path ->SMSC->FCC-> GIW-STP may be obtained.

Taking the uplink transmission of the short messages by the GIW 1 as an example, under the normal condition, assuming that the GIW 1 uplink transmission of the short messages is along the path ->STP->GIW1->SMSC 1, that is, the GIW 1 transmits the short messages directly to a peer module in the path, i.e. the SMSC 1, if the SMSC1 cannot process the short messages due to some reasons, the uplink short messages can be transmitted along the redundancy path, such as ->STP->GIW1->FCC->SMSC2, ->STP->GIW1->FCC->SMSC3, or ->STP->GIW1->FCC-> SMSC4, and obviously they can be transmitted along any two or three of the three redundancy paths. That is, the GIW 1 transfers the short messages to the FCC first, and then the FCC selects the diverging path for transmitting the short messages. In this case, the diverging path includes any from the FCC to the SMSCs other than the SMSC 1. As discussed above, the path can be single or plural, since the FCC may select one SMSC other than the SMSC 1, or select several, or all the SMSCs other than the SMSC 1. Subsequently, the FCC sends the short messages to the SMSCs other than the SMSC 1 through the selected diverging paths.

Herein, the reasons that each module triggers diverging in the diverging SMS system include:
a. the connection between the GIW and the SMSC breaks;
b. the SMSC is busy, i.e. the load is indicated over heavy;
c. the GIW is busy, i.e. the load is indicated over heavy.

Accordingly, if the connection between the GIW and a SMSC breaks, the GIW may send the messages previously designated to the SMSC, to the FCC, and the FCC may diverge and transfer the messages; similarly, if the connection between the SMSC and a GIW breaks, the SMSC may send the messages previously designated to the GIW, to the FCC, and the FCC will diverge and transfer the messages.

Moreover, if a SMSC is busy, all the GIWs connected with the busy SMSC may send the messages that are previously send to the busy SMSC, to the FCC, and the FCC will diverge and transfer the messages; similarly, If a GIW is busy, all the SMSCs connected with the GIW may send the messages to the FCC, and the FCC will diverge and transfer the messages.

In addition, as discussed above, after the FCC receives the short messages, the diverging path should be determined and then the short messages are diverged and transferred through the diverging path. In order to make it more convenient for the FCC to determine the diverging path for the short messages, a unique identification can be signed to each module connected with the FCC in the diverging SMS system. Specifically, when any module transfers the short messages to be diverged to the FCC, the identification information including a former destination of the short messages can be set in the short messages. As a result, when the FCC selects the diverging path, it can recognize a respective type of the module according to the identification and can determine other modules in the networking of the same type with the module having such identification according to the identification. And then the FCC can select one or more modules from the determined other modules to determine the diverging path. In order to ensure the uniqueness and correctness of the identification of each module, the FCC can authenticate the identification for each module when it connects with the FCC.

Furthermore, the short messages presently include three types, i.e. group transmission, unchangeable destination and changeable destination. Accordingly, the GIW and the SMSC in the diverging SMS system can indicate a type of the short messages that are sent to the FCC. Specifically, the type of the messages can be sent to the FCC along with the short messages. The following examples describe the diverging path schemes by the FCC in response to the three types of short messages when the GIW 1 cannot send the short messages to the SMSC 1 and is required to transfer them to the FCC.

If the GIW 1 indicates the short messages transferred to the FCC are the changeable destination messages, the FCC can select the paths from itself to one or more SMSCs other than the SMSC I in the diverging SMS system as the diverging paths, or select the paths from itself to all the SMSCs other than the SMSC 1 as the diverging paths.

If the GIW 1 indicates the short messages transferred to the FCC are the group transmission messages, the FCC directly select the paths from itself to all the SMSCs other than the SMSC 1 as the diverging paths.

Moreover, if the GIW 1 indicates the short messages transferred to the FCC is the unchangeable destination messages, the GIW 1 is required to provide related information for the unchangeable destination module, i.e. the information related to the specified SMSC, and therefore the FCC is required to transfer the short messages to the specified SMSC, i.e. selecting the path to the specified SMSC as the diverging path.

The above function for redundancy path provides the solutions for the FCC to select the diverging paths.

Furthermore, as for the changeable destination messages, the GIW 1 can set a processing mode for the short messages and the FCC will process the short messages according to the processing mode.

For instance, if the GIW 1 indicates the short messages are the changeable destination type, the GIW 1 may send the processing mode of the short messages to the FCC along with the short messages. The processing mode presently includes a designated destination mode and an undesignated destination mode. If the processing mode determined by the GIW 1 is the designated destination mode, the information related to the designated destination module is required to be included in the short messages. In such case, before the FCC selects one or more SMSCs, it is required to determine whether a processing mode associated with the short messages is included in the short messages. If an undesignated destination mode is included, selects one or more SMSCs directly; if a designated destination mode is included, acquires the information related to the corresponding destination module, i.e. a certain SMSC, and determines whether this SMSC is available for diverging the traffic, and if not, the FCC selects one or more SMSCs; if yes, selects this SMSC in priority and then, when this SMSC is unable to diverge all the traffic of the short messages, selects one or more other SMSCs to diverge the short messages.

The FCC can determine the specific realization solutions for diverging and transferring messages in the former determined diverging paths according to the operation and the load of each module in the diverging SMS system. The specific realization solution is realized by the following intelligent diverging function.

Below reference is made to the function for intelligent diverging according to the present invention.

All the SMSCs and the GIWs connected with the FCC in the system are required to report their respective operating information periodically. Of course, when all the modules are working properly, the SMSCs and the GIWs just report their own operating information, while the short messages are transmitted through a normal path yet donot requires transferring to the FCC. When it requires diverging, the SMSCs and the GIWs transmit the short messages to be diverged to the FCC. If the short messages are the changeable destination messages, the FCC can select a most reasonable and most effective diverging and transferring way from the determined diverging paths according to the operating information reported periodically from the SMSCs or the GIWs, and transfer the messages then.

In the above process, it first analyses and determines the operating information reported to the FCC from the SMSCs and the GIWs. The operating information may include load information and an operating status. Regarding the SMSC, a main function is to store and schedule the short messages, and its load status depends not only on the load value (Mobile Origin speed). For example, when the issue of the short messages fails, the short messages need to be stored waiting for a next scheduling, which causes a part of the load for the SMSC. Therefore, a remaining load cannot represent its entire load. In contrast, a current available load of the GIW can represent its entire load. Besides, the property of the GIW is that it can detect whether a signaling link to the STP is available, and if the link breaks down, it indicates the GIW cannot process the short messages. Therefore, the operating information of the SMSC may presently include a maximum load, a current available load and a current available status, where the available status indicates a busy or a free status of the SMSC; whereas, the operating information of the GIW may presently include a maximum load, a current available load and a current available status.

If the operating information reported to the FCC from each module in the networking includes the current available status, the FCC can select one or more other modules according to the available status of each module. Specifically, the FCC needs to acquire the operating information of each module in the other modules and determine whether the available status of each module is available, and if yes, selects this module; otherwise, abandons the module. If the FCC does not receive the current available status information within a period, the FCC may determine the current available status of the module is unavailable.

In addition, when the FCC receives the short messages from a certain module, if the short messages are the changeable destination messages and the FCC selects several modules to transfer the short messages, it may determine the short message traffic distributed to these selected modules according to the operating information of the modules and then diverge the messages under the respective short message traffic as determined.

If the operating information reported by each module includes the maximum load and the current available load, the FCC can count a sum of the remaining processing capabilities of each SMSC that can currently diverge the traffic, i.e. Σ remaining capacity. The Σ remaining capacity is a sum of the current available load of each SMSC. Also, the FCC counts a sum of the short message traffic to be diverged by these modules. And then, determines based on the two sums.

If the Σ remaining capacity is equal to the sum of the short message traffic or more, computes the traffic diverged to each SMSC proportionally. For example, the short messages can be diverged averagely to each SMSC; or alternatively, it can compute the traffic to be diverged to the SMSCs according to their respective processing capabilities, and then transfer the messages accordingly.

If the Σ remaining capacity is less than the sum of the short message traffic, firstly, distributes a short message traffic that is equal to the Σ remaining capacity to each SMSC proportionally, for example, the traffic can be averagely distributed to each SMSC or can be distributed according to the remaining processing capacity of each SMSC. After this distribution, there is remaining short message traffic, which can be distributed to each SMSC proportionally according a maximum processing capacity of the SMSCs that can diverge the traffic, and obviously the remaining short message traffic can be distributed averagely.

Moreover, as discussed above, if the short messages sent to the FCC from the GIW1 are the changeable destination messages, the GIW1 is required to designate the specific processing mode for the short messages; for example, the processing mode can be designated as the designated destination mode or the undesignated destination mode.

If the processing mode of the short messages is designated as the undesignated destination mode, the FCC can process directly according to the above distribution solution. If the processing mode of the short messages is designated as the designated destination mode, the FCC can perform the following processing.

The FCC acquires the related information such as the identification of the designated destination module and determines whether the destination module can diverge the traffic. If not, processes as discussed above; and if the destination module can, the short messages will be transmitted to this destination module in priority. Specifically, it includes: acquiring the current available processing capacity of the destination module, i.e. the current available load, and if the available processing capacity suffices to transfer the current short messages, transfers the current short messages to the destination module; otherwise, transfers the short messages according to the available processing capability and diverges to transfer the remaining short messages according to the above processes.

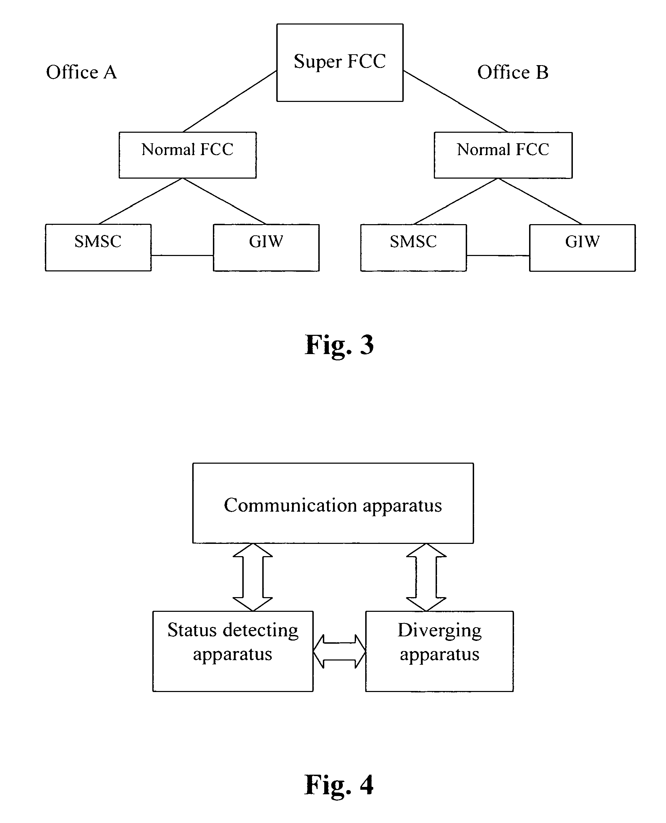

In addition, the above FCC is set in a networking so as to diverge and transfer the short messages in the networking. The networking is named an office, where each office corresponds to one diverging SMS system in the present invention and generally has several SMS systems. In some cases, even all the SMS systems in an office together can not diverge and transfer the short messages in the present office. At this time, a super FCC can be set, which is connected with several normal FCCs, i.e. FCCs in the office as exemplarily illustrated in Fig. 3. Each normal FCC sends the operating information of each module in each SMS system in the present office to the super FCC. Thus, if some normal FCC determines it cannot diverge and transfer the short messages in the present office, it can transfer the short messages to the super FCC and the super FCC will select another office to diverge and transfer the short messages. For example, the super FCC can decide which office is comparatively free according to the operating information reported by the normal FCCs and transfer the received short messages to a normal FCC in the free office. The normal FCC in the free office will diverge and transfer the short messages. Herein, the diverging and transferring processes by the normal FCC in the free office is the same as described above.

The above description shows the diverging SMS system provided by the technical solution of the present invention includes a FCC. When the peer module in the current SMS path cannot receive short messages, each module in the SMS system sends the short messages to the FCC and receives the short messages forwarded by the FCC. If the GIW needs to transfer the short messages to the FCC, the short message path is a short message submission path; and if the SMSC needs to transfer the short messages to the FCC, the short message path is a short message transmission path. The FCC is mainly used to receive the short messages from each module in the diverging SMS system, determine the diverging paths for the short messages and diverge for transferring the short messages through the determined diverging paths.

Specifically, the FCC may include two apparatuses, i.e. a communication apparatus and a diverging apparatus. The two apparatuses are used to perform the above diverging processes.

In particular, the communication apparatus communicates with each module in the diverging SMS system, i.e. the SMSC and the GIW in the diverging SMS system. For example, after receiving the short messages from each module, the communication apparatus transmits the short messages to the diverging apparatus, receives the diverging path information determined by the diverging apparatus and transfers the short messages through the diverging path.

The diverging apparatus receives the short messages from the communication apparatus, determines the diverging path for the short messages and sends the determined diverging path to the communication apparatus. The implements for determining the diverging path for the short messages by the diverging apparatus is discussed as above, which will not be detailed here.

By these two apparatuses, the FCC realizes to diverge and transfer the short messages.

In addition, the modules such as the SMSC and the GIW in the diverging SMS system may report their respective operating information to the FCC. In such case, a status detecting apparatus may be provided in the FCC, as shown in Fig. 4. Accordingly, the communication apparatus is required to receive the operating information of the SMSC and the GIW, and send the operating information to the status detecting apparatus. The status detecting apparatus detects the operating information of the SMSC and the GIW, determines whether the module can diverge the traffic according to its respective operating information and sends the information on whether the module can diverge the traffic to the diverging apparatus. The diverging apparatus can determine the diverging path for the short messages according to information on whether the module can diverge the traffic.

If the status detecting apparatus does not receive the operating information of a module in a set time, it may acknowledge the module cannot diverge the traffic currently and send the information that the module cannot diverge the traffic to the diverging apparatus.

It should be appreciated that the present invention is described as above with reference to the preferred embodiments, which however do not serve as limitations to the invention. It will be apparent to those skilled in the art that various modifications and variations can be made in the present invention. Thus, it is intended that the present invention covers the modifications and variations of this invention provided they come within the scope of the appended claims and their equivalents.

## Claims

1. A method for diverging short messages, applicable to a system including more than one SMS (short message service) system each having modules including a SMSC (short message service center) and a GIW (Gateway Interworking) connected with the SMSC, wherein the system including more than one SMS system is provided with a FCC (flow control center) configured to connect with each module, said method comprising
sending the short messages to the FCC by one module, in a case that a peer module of said one module in a SMS path for said short messages is unable to receive short messages; and
determining a diverging path for the short messages by the FCC after receiving the short messages, and sending the short messages through the diverging path.

2. The method according to claim 1, wherein the case that a peer module of said one module in a SMS path for said short messages is unable to receive short messages is determined by that a connection between said one module and the peer module breaks, or the peer module is busy.

3. The method according to claim 1, wherein determining a diverging path for the short messages by the FCC comprises
selecting one or more modules by the FCC from other modules of a same type with the peer module in the networking, and
determining paths from the FCC to the selected modules to be the diverging paths for the short messages.

4. The method according to claim 1, further comprising
setting a message type for the short messages sent to the FCC, the message type including one or more from a changeable destination type, an unchangeable destination type and a group transmission type.

5. The method according to claim 4, wherein in a case that the short messages are the unchangeable destination type, said method further comprises carrying information of an unchangeable destination module in the short messages, wherein
determining a diverging path for the short messages by the FCC comprises acquiring information of the unchangeable destination module by the FCC from the short messages and determining a path from the FCC to the unchangeable destination module to be the diverging path for the short messages.

6. The method according to claim 4, wherein in a case that the short messages are the changeable destination type, determining a diverging path for the short messages by the FCC comprises
selecting one or more modules by the FCC from modules of a same type with the peer module in the networking, and
determining paths from the FCC to the selected modules as the diverging paths for the short messages.

7. The method according to claim 4, wherein in a case that the short messages are the group transmission type, determining a diverging path for the short messages by the FCC comprises
selecting other modules of a same type with the peer module in the networking by the FCC, and
determining paths from the FCC to all the other modules as the diverging paths for the short messages.

8. The method according to claim 6, wherein in the case that the short messages are the changeable destination type, the short messages carry a respective processing mode, the processing mode including a designated destination mode and an undesignated destination mode.

9. The method according to claim 8, further comprising
determining the processing mode carried in the short messages, prior to selecting one or more modules by the FCC, wherein
if the undesignated destination mode is carried, performs selecting one or more modules by the FCC; and
if the designated destination mode is carried, carries information of a destination designated module in the short messages, and the FCC acquires the information of the destination designated module and determines whether the destination designated module is able to diverge a traffic of the short messages, and if not, performs selecting one or more modules by the FCC; if yes, selects the destination designated module in priority and when the destination designated module is unable to diverge all the traffic of the short messages, performs selecting one or more modules by the FCC.

10. The method according to claim 3, 6, or 9, further comprising
setting a unique identification for each module in the networking; and
sending an identification of the peer module to the FCC by the module through the short messages, wherein
selecting one or more modules by the FCC comprises the FCC acquiring the identification of the peer module from the short messages, determining a type of a module corresponding to the identification, determining other modules of a same type with the peer module in accordance with the identification and selecting one or more modules from the other modules.

11. The method according to claim 10, further comprising
authenticating the identification of the module by the FCC, when the module accesses the FCC.

12. The method according to claim 6 or 9, further comprising
each module in the networking reporting a respective operating information thereof to the FCC; and
the FCC determining a respective short message traffic for each selected module in accordance with operating information of said each selected module, and sending the short messages through the respective diverging path under the determined short message traffic, after selecting one or more modules by the FCC from modules of a same type with the peer module in the networking and determining paths from the FCC to the selected modules as the diverging paths for the short messages, but prior to sending the short messages through the diverging paths.

13. The method according to claim 12, wherein
the operating information includes a maximum load and a current available load; and wherein
the FCC determining a respective short message traffic for each selected module in accordance with operating information of said each selected module comprises
the FCC counting a sum of the available load of all the selected modules and counting a sum of the short message traffic of the selected modules to be diverged, where
if the sum of the available load is equal to the sum of the short message traffic or more, diverges the short messages averagely or proportionally to the available load of each module, to each selected module;
otherwise, diverges a traffic of the short messages equal to the sum of the available load to all the selected modules averagely or diverges the traffic of the short messages proportionally to the available load of each module, and then diverges the remaining traffic of the short messages to all the selected modules under the maximum load of said selected modules or averagely.

14. The method according to claim 3, 6 or 9, further comprising each module in the networking reporting a respective operating information thereof to the FCC, the operating information including a current available status, wherein
selecting one or more modules by the FCC from other modules comprises acquiring operating information of each said other module and determining whether the current available status of each said other module is available, and if yes, selecting said other module; otherwise, abandoning the module.

15. The method according to any of claims 1 to 9, wherein
in the networking, a module in a SMS system is further connected with corresponding modules in other SMS systems; and
the peer module belongs to a SMS system involving a module currently sending the short messages, or belongs to a SMS system other than the SMS system involving a module currently sending the short messages.

16. A system for diverging short messages comprising
more than one SMS (short message service) system, each having modules including a SMSC (short message service center) and a GIW (Gateway Interworking) connected with the SMSC; and
a FCC (flow control center), configured to connect with each module for diverging short messages, wherein
each module in the SMS system is configured to send short messages to the FCC in a case that a peer module of said each module in a SMS path for said short messages is unable to receive the short messages, and receiving short messages forwarded by the FCC; and
the FCC is configured for receiving the short messages from said each module, determining diverging paths for the short messages and sending the short messages to other modules though the diverging paths.

17. The system for diverging short messages according to claim 16, wherein
the FCC comprises a communication apparatus and a diverging apparatus, wherein,
the communication apparatus is configured to receive the short messages from each module, receive the diverging paths determined by the diverging apparatus and transfer the short messages to the other modules though the diverging paths; and
the diverging apparatus is configured to receive the short messages from the communication apparatus, determine the diverging paths for the short messages and send the determined diverging paths to the communication apparatus.

18. The system for diverging short messages according to claim 16, wherein the FCC further comprises a status detecting apparatus, and wherein
each module is further configured for reporting a respective operating information thereof to the communication apparatus in the FCC;
the communication apparatus is further configured for sending the received operating information to the status detecting apparatus;
the status detecting apparatus is further configured for receiving the operating information of each module from the communication apparatus, determining whether the module corresponding to the operating information is able to diverge short message traffic and sending information on whether the module is able to diverge the short message traffic to the diverging apparatus; and
the diverging apparatus is further configured for receiving the information on whether the module is able to diverge the traffic from the status detecting apparatus and determining the diverging paths in accordance with the information.

19. The system for diverging short messages according to claim 18, wherein the status detecting apparatus is further configured to acknowledge that the module is unable to diverge the traffic currently and send the information that the module is unable to diverge the traffic to the diverging apparatus, if not receiving the operating information of the modules from the communication apparatus within a predetermined time.

20. The system for diverging short messages according to any of claims 16 to 19, wherein modules in a SMS system are connected with one or more respective modules in other SMS systems.
